# EUROPEAN PATENT SPECIFICATION

(11) **EP 2 706 352 B1**
(45) Date of publication and mention of the grant of the patent: **05.11.2014**
(21) Application number: 12183064.0
(22) Date of filing: 05.09.2012
(51) Int. Cl.: G01N 30/46, G01N 35/10

(54) **Comprehensive two-dimensional gas chromatograph and modulator for such a chromatograph**
Umfassender, zweidimensionaler Gaschromatograph und Modulator für einen derartigen Chromatographen
Chromatographe bidimensionnel global en phase gazeuse et modulateur pour un tel chromatographe

(43) Date of publication of application: 12.03.2014
(73) Proprietor: Siemens Aktiengesellschaft, 80333 München (DE)
(72) Inventor: Gellert, Udo, Bartlesville 74006 (US)

(56) References cited:
- US-A1- 2007 023 719
- US-B2- 6 447 581
- FIROR ROGER L: "Comprehensive Flow Modulated Two-Dimensional Gas Chromatography System - Application Brief", AGILENT TECHNOLOGIES , 2007, pages 1-4, XP002691186, Retrieved from the Internet: URL:http://www.gcimage.com/publications/59 89-6078EN.pdf [retrieved on 2013-01-29]
- GROSS G M ET AL: "HIGH-SPEED GAS CHROMATOGRAPHY USING SYNCHRONIZED DUAL-VALVE INJECTION", ANALYTICAL CHEMISTRY, AMERICAN CHEMICAL SOCIETY, US, vol. 76, no. 13, 1 July 2004 (2004-07-01), pages 3517-3524, XP001209784, ISSN: 0003-2700, DOI: 10.1021/AC049909G
- PETER QUINTO TRANCHIDA ET AL: "A flexible loop-type flow modulator for comprehensive two-dimensional gas chromatography", JOURNAL OF CHROMATOGRAPHY A, vol. 1218, no. 21, 1 May 2011 (2011-05-01) , pages 3140-3145, XP055001750, ISSN: 0021-9673, DOI: 10.1016/j.chroma.2010.11.082

## Description

The invention relates to a comprehensive two-dimensional gas chromatograph having a first separation column, a second separation column and a modulator controlled by a controller for sampling a chromatographic peak eluting from the first column into the second column.

It further relates to a modulator for such a chromatograph.

A "Review of the Basic Concepts of Comprehensive Two-Dimensional Gas Chromatography" is given by Ruby C.Y. Ong and Philip J. Marriott in Journal of Chromatographic Science, 40 (2002) 276-291.

Comprehensive two-dimensional gas chromatography (GC x GC) has to be distinguished from multidimensional or heart-cut gas chromatography (GC - GC), where two separation columns are connected by a valve which allows to introduce a selected fraction (heart cut) of the eluate from the first column (first dimension) into the second column (second dimension) for further separation and detection. The selected fraction may be a chromatographic peak which emerges from the first column and contains analytes which have not yet been fully separated.

In comprehensive two-dimensional gas chromatography, the whole sample is ideally independently separated in the two separation columns which are connected sequentially with a modulator positioned between them. Typically, the first dimension is a conventional column and the second dimension a short, fast-elution column. The modulator serves to focus the effluent from the first column in short plugs and to inject them in the second column for rapid separation. There are different types of modulators, some of them are based on temperature differences and others on valve operation.

In cryogenic modulators, for example, the analytes which appear at the end of the first column are collected and concentrated in a cooled region (trap) and released to the second column by heating this region. This allows to sample and transfer complete chromatographic peaks eluting from the first column.

Valve-based modulators advantageously work without cooling and heating and can be used for fast peaks because they operate at a relatively high frequency. They are simpler, smaller, more rugged and less costly as thermal modulators. Valve-based modulators usually sample less than the complete chromatographic peak because they vent the effluent from the first column to a certain extent so that portions of the effluent will get lost. However, if the peak is short, it may be transferred as a whole by collecting the eluate coming from the first column into a sampling loop and then switching a valve and injecting the content of the sampling loop into the second column at a very high flow rate, a technique which is known for injecting a sample volume into a gas chromatograph. To this end, the modulator may include a six-port valve which in a first position connects the sampling loop in line with the first column and an exhaust, and in a second position connects the sampling loop in line with a carrier gas source and the second column.

Following Gwen M. Gross et al. "High-Speed Gas Chromatography Using Synchronized Dual-Valve Injection", Analytical Chemistry 76 (2004) 3517-3524 who disclose an injection system for high-speed gas chromatography, the above mentioned modulator can be modified by arranging a further six-port valve between the first valve and the second column. The second valve in its first position connects either the carrier gas source (first valve in first position) or the sampling loop (first valve in second position) to the second column. In its second position, the second valve connects the second column to the carrier gas source and the sampling loop to an exhaust (first valve in second position). Thus, it is possible to obtain a sharp, fast and accurate injection pulse that far exceeds the pulse width provided by a single valve. Because the high-speed valves actuate independently, the injection pulse width can be varied depending upon the separation requirements. However, high-speed six-port diaphragm valves are expensive, complex in design and may cause flow disturbances on switching.

From US 6,447,581 B2 a gas flow switching device is known which allows valve-less injection of a sample into a separation column. The device comprises a planar component in which different gas passages are formed by micro-machining techniques in the broadest sense. A first gas passage is at one end connected to a carrier gas source via a capillary and a solenoid valve and at the other end connected to the separation column. A second gas passage receives at one end the sample via a capillary from a sampling loop and opens at the other end to an exhaust capillary. The first and second gas passages a connecting gas passage between the first and second gas passages communicate with one another via a connecting gas passage. When the solenoid valve is open, carrier gas flows through the first gas passage to the separation column; a small percentage of the carrier gas flows into the connecting gas passage and keeps the sample flowing in the second gas passage away from the first gas passage and the column. When the solenoid valve is closed for a short time, the sample is diverted from the second gas passage into the connecting gas passage and reaches the separation column via the first gas passage.

As mentioned above, valve-based modulators two-dimensional gas chromatographs vent the effluent from the first column to a certain extent so that portions of the effluent will get lost. In order to minimize the corrupting influence of the missing effluent, the peak from the first column is preferably sampled at several times into the second column so that several slices of each peak are delivered to the second column. This requires very fast switching and short delays, for instance an injection pulse width of less than 3 ms and an injection cycle time of less than 9 ms.

FIROR ROGER L: "Comprehensive Flow Modulated Two-Dimensional Gas Chromatography System - Application Brief", AGILENT TECHNOLOGIES, 2007, pages 1-4, XP002691186, discloses a planar modulator using a single valve for switching between a sample accumulation mode and an injection mode.

It is therefore an object of the invention to provide by simple means a fast and precise sampling of a first dimension peak in two-dimensional gas chromatography.

According to the invention this object, among other advantages, is achieved by the two-dimensional gas chromatograph defined in claim 1 or the modulator defined in claim 6.

One subject of the invention is thus a comprehensive two-dimensional gas chromatograph having a first separation column, a second separation column and a modulator controlled by a controller for sampling a chromatographic peak eluting from the first column into the second column, wherein said modulator comprises a planar component containing
a first gas passage having
   a first inlet end to which a carrier gas source is connected and
   a first outlet end to which the second separation column is connected,
a second gas passage having
   a second inlet end to which the first separation column is connected and
   a second outlet end,
a connecting gas passage between the first and second gas passages,
two individually controllable open/close valves arranged in parallel connection in the first gas passage between the first inlet end and the branch-off of the connecting gas passage, and
the gas passages and valves being formed in the planar component by micromachining, and
wherein said controller is adapted to start each sample event by controlling one of the valves from open to close when the other valve is closed and to stop the sample event by controlling the other valve to open.

Another subject of the invention is a modulator for sampling a chromatographic peak eluting from a first separation column into a second separation column of a comprehensive two-dimensional gas chromatograph, wherein said modulator comprises a planar component containing
a first gas passage having
   a first inlet end for the connection of a carrier gas source and
   a first outlet end for the connection of the second separation column,
a second gas passage having
   a second inlet end for the connection of the first separation column and
   a second outlet end,
a connecting gas passage between the first and second gas passages,
two individually controllable open/close valves arranged in parallel connection in the first gas passage between the first inlet end and the branch-off of the connecting gas passage, and
the gas passages and valves being formed in the planar component by micromachining.

The invention advantageously modifies the gas flow switching device known from US 6,447,581 B2 by integrating two parallel simple open/close valves into the first gas passage in the planar component. The eluate from the first column is diverted from the second gas passage into the connecting gas passage toward the second separation column only when both valves are closed. Both valves are controlled to switch with a time difference which defines the injection pulse width. One of the valves is responsible for the start of the injection pulse and the other for the end of the injection pulse. So, the mass inertia of the valves plays a secondary role for the injection pulse width. Furthermore, due to the fact that the open/close valves are integrated in the MEMS planar component, very short gas path between the valves and the point where the connecting gas passage branches off from the second gas passages can be realized so that the peak from the first column can be sampled with minimal time delay.

The valves may be adapted to be electromechanically actuated, e. g. by solenoids or piezoelectric elements integrated in or mounted on the planar component.

In another preferred embodiment, the valves are adapted to be pneumatically actuated via pneumatic connections in the planar component. This leads to very a simple and inexpensive design of the planar component in the form of a passive component which has no other than gas connections.

The valves are preferably of snap-action type where the valve body, e. g. a membrane, is deflectable from a stable position where the valve is open to a metastable position where the valve is closed. This allows injection pulses with sharp front and rear edges.

The invention will now be described in greater detail by way of example and with reference to the drawing figures in which:
- FIG. 1: illustrates an exemplary embodiment of the gas chromatograph in the form of a block diagram;
- FIG. 2: illustrates a view of a first embodiment of the modulator as a part of the gas chromatograph;
- FIG. 3: illustrates a view of a second embodiment of the modulator;
- FIG. 4: illustrates a block diagram and view of another exemplary embodiment of the modulator;
- FIG. 5: illustrates an exemplary embodiment of one of two open/close valves as a part of the modulator;
- FIG. 6: illustrates a first example for controlling the valves;
- FIG. 7: illustrates a second example for controlling the valves.

In the following description, like reference numerals designate like parts or elements.

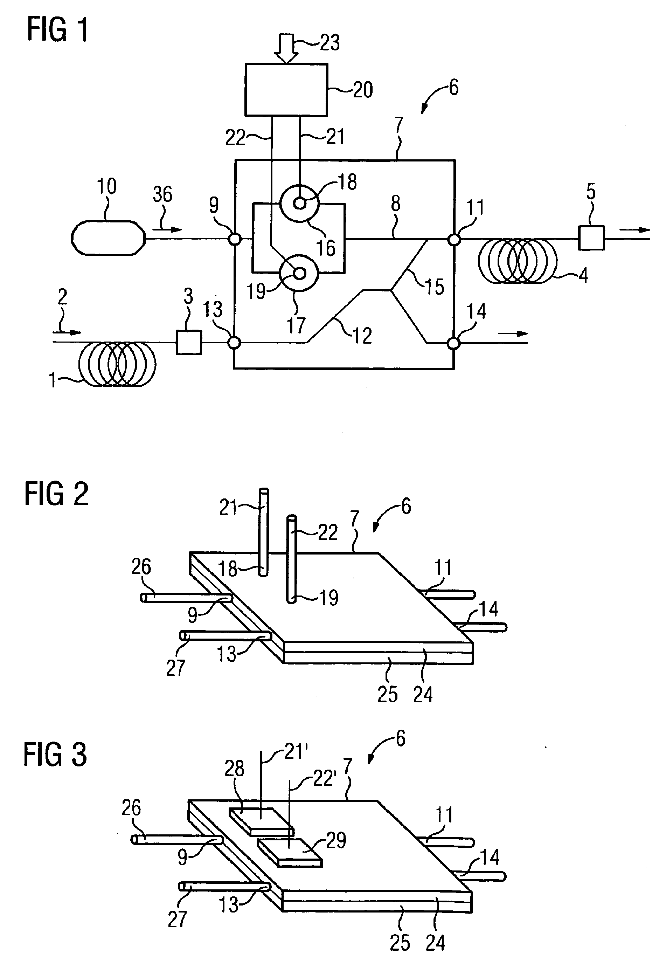

FIG. 1 illustrates a simplified block diagram of a comprehensive two-dimensional gas chromatograph where only parts relevant to the embodiment of the present invention are illustrated.

The gas chromatograph comprises a first separation column 1 through which a predetermined metered quantity of a gaseous sample 2 in the form of a short plug is fed by means of a carrier gas. The separation column 1 is designed to separate the sample components contained in the sample 2 as they flow through the column 1 so that the individual sample components arrive in succession at a detector 3 at the end of the column 1. For each detected component, the detector 3 supplies a detector signal in the form of a chromatographic peak, which is analyzed for quantitative determination of the component. The term peak is often, and also here, used for both the detector signal and the corresponding eluate emerging from the separation column 1. Unresolved peaks may overlap, partially or completely, compromising their identification and quantification.

In order to separate and analyze each chromatographic peak or selected peaks for a second time by a second, e. g. fast-elution, separation column 4 and detector 5, a modulator 6 is positioned between the columns 1 and 4. The modulator 6 is based on valve operation and rapidly samples chromatographic peaks eluting from the first column 1 into the second column 4.

The modulator 6 comprises a planar component 7 in which different gas passages are formed by micromachining, e. g. etching techniques. The gas passages consist of channels which have the same inner diameter as that of the second separation column 4. A first gas passage 8 has a first inlet end or port 9 to which a carrier gas source 10 is connected, and a first outlet end 11 to which the second separation column 4 is connected. A second gas passage 12 has a second inlet end 13 to which the first separation column 1 followed by the detector 3 is connected, and a second outlet end 14 which serves as a gas exhaust port. The first and second gas passages 8 and 12 communicate with each other via a connecting gas passage 15. The connecting gas passage 15 branches off, at an obtuse angle, from the portion of the second gas passage 12 that comes from the second inlet end 13. At this branch point, the second gas passage 12 continues at the same angle in another direction, so that the connecting gas passage 15 and the continuation of the second gas passage 12 form a symmetrical branching fork.

Two individually controllable open/close valves 16, 17, which are formed in the planar component 7 by micromachining, are arranged in parallel connection in the first gas passage 8 between the first inlet port 9 and the branch-off of the connecting gas passage 15. In the shown example, the valves 16, 17 are adapted to be pneumatically actuated via pneumatic connections 18, 19 in the planar component 7. The valves 16, 17 are controlled by a controller 20 via pneumatic lines 21, 22. The pneumatic controller 20 may include electromechanically actuated valves which are controlled according to a control scheme 23 provided by a higher-level control system (not shown) of the gas chromatograph.

FIG. 2 illustrates a view of the planar component 7 of the modulator 6. The planar component 7 comprises two plates 24, 25 that are positioned on top of one another and joined together. Congruent channels, which have respective semicircular cross sections, are formed on those sides of the two plates 24, 25 that face one another. These channels form the gas passages 8, 12, 15 (FIG. 1) and the inlet and outlet ends 9, 11, 13, 14 at their lateral exit points from the plates 24, 25. At the inlet and outlet ends 9, 11, 13, 14, the cross sections of the gas passages 8, 12 may be enlarged to accommodate capillaries such as capillary 26 from the carrier gas source 10 or capillary 27 from the first column 1. This also applies accordingly to the pneumatic connections 18, 19 and pneumatic lines 21, 22.

FIG. 3 illustrates another example of the planar component 7 where the valves 16, 17 are electromechanically actuated by solenoids or piezoelectric elements 28, 29 integrated in or mounted on the planar component 7 and controlled by the now electronic controller 20 (FIG. 1) via electric signal lines 21', 22'.

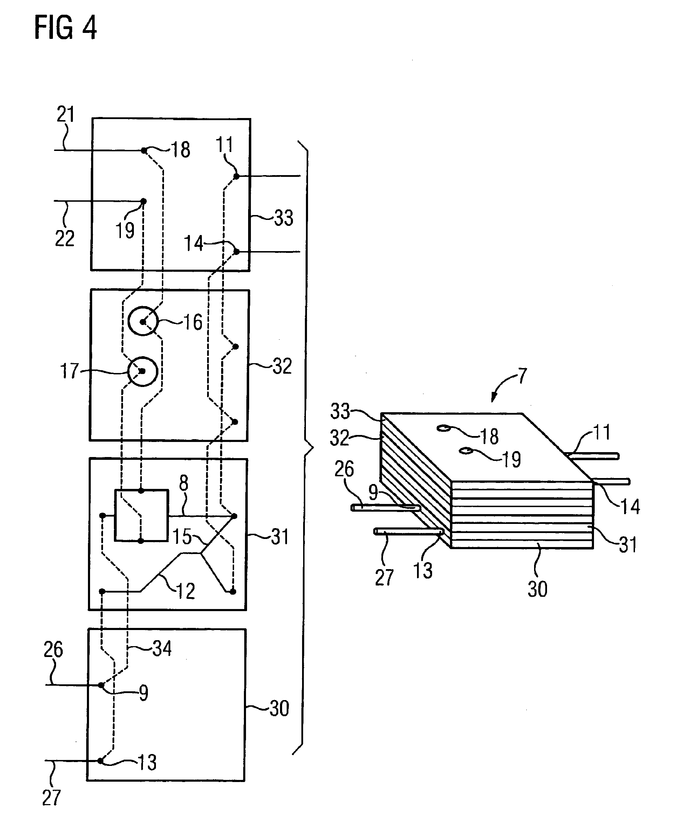

FIG. 4 illustrates on the left-hand side a block diagram and on the right-hand side a view of yet another embodiment of the planar component 7 which comprises different double plates 30, 31, 32, 33 assembled into a stack. The two outer double plates 30, 33 feature all fluidic ports or connections 9, 13, 11, 14, 18, 19 and electrical connections for the signal lines 21', 22' (FIG. 3) if the valves 16, 17 are electromechanically actuated. The double plate 32 contains the gas passages 8, 12, 15. The double plate 33 contains the valves 16, 17. As indicated by dashed lines 34, fluidic connection between the different double plates 30, 31, 32, 33 is established by vertical channels.

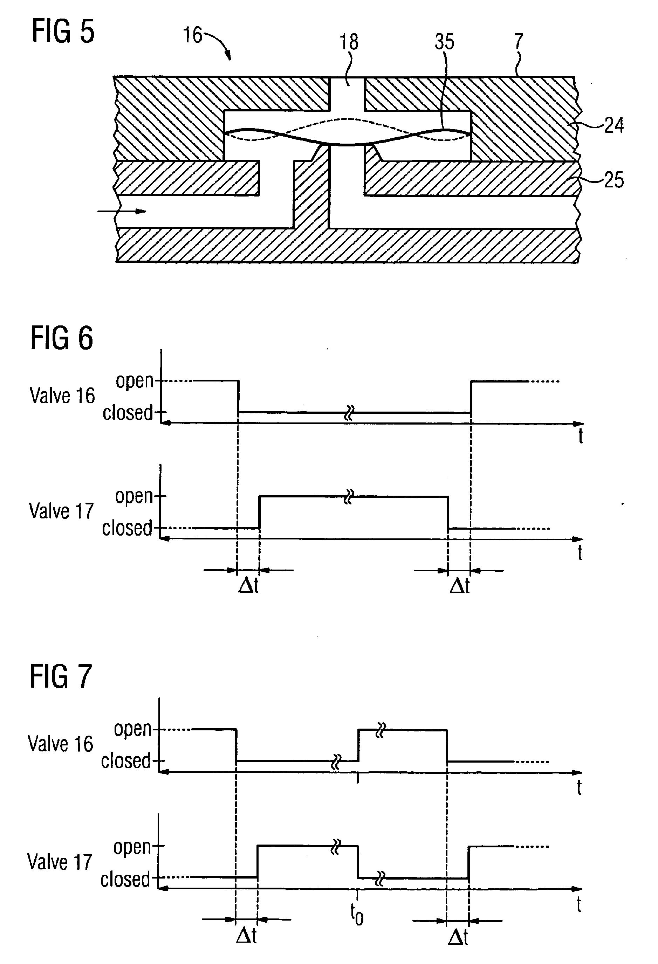

FIG. 5 illustrates in a simplified form an example of the open/close valve 16 which is representative for both valves 16, 17. The valve 16 is formed in the planar component 7 by micromachining and has a valve body 35, here in the form of a membrane, which deflectable from a stable position where the valve 16 is open to a metastable position where the valve 16 is closed. The valve 16 is pneumatically actuated via the pneumatic connection 18 in the planar component 7.

Referring again to FIG. 1, when one or both of the valves 16, 17 are open, carrier gas flows through the first gas passage 8 to the second separation column 4. A small percentage of the carrier gas 36 flows into the connecting gas passage 15 and prevents the eluate flowing in the second gas passage 12 from entering the connecting gas passage 15. When both valves 16, 17 are closed, the eluate is diverted from the second gas passage 12 into the connecting gas passage 15 and reaches the second separation column 4 via the first gas passage 8.

FIGs. 6 and 7 illustrate two examples for controlling the valves 16, 17. The valves 16, 17 are controlled in such a way that first one valve, e. g. 16, switches from to open to closed while the other valve 17 is closed, and after a predetermined time difference Δt the other valve 17 switches from to closed to open. The time difference Δt defines the pulse width of the injection of the eluate from the second gas passage 12 into the connecting gas passage 15. In the example of FIG. 6, the switching status of each valve is maintained after each injection so that the responsibility for the start (or the end) of the injection pulse alternates between the valves 16, 17. In the example of FIG. 7, the switching status of each valve is changed at any time to between two successive injections so that the responsibility for the start or the end of the injection pulse remains with the respective valves 16, 17.

The present invention may be embodied in other specific forms without departing from the scope of the appended claims. The described embodiments are to be considered in all respects only as illustrative and not restrictive.

## Claims

1. A comprehensive two-dimensional gas chromatograph having a first separation column (1), a second separation column (4) and a modulator (6) controlled by a controller (20) for sampling a chromatographic peak eluting from the first column (1) into the second column (4),
wherein said modulator (6) comprises a planar component (7) containing
a first gas passage (8) having
a first inlet end (9) to which a carrier gas source (10) is connected and
a first outlet end (11) to which the second separation column (4) is connected,
a second gas passage (12) having
a second inlet end (13) to which the first separation column (1) is connected and
a second outlet end (14),
a connecting gas passage (15) between the first and second gas passages (8, 12),
two individually controllable open/close valves (16, 17) arranged in parallel connection in the first gas passage (8) between the first inlet end (9) and the branch-off of the connecting gas passage (15), and
the gas passages (8, 12, 15) and valves (16, 17) being formed in the planar component (7) by micromachining, and
wherein said controller (20) is adapted to start each sample event by controlling one of the valves (16, 17) from open to close when the other valve is closed and to stop the sample event by controlling the other valve to open.

2. The gas chromatograph of claim 1, wherein the valves (16, 17) are each adapted to be electromechanically actuated.

3. The gas chromatograph of claim 1, wherein the valves (16, 17) are each adapted to be pneumatically actuated via pneumatic connections (18, 19) in the planar component (7).

4. The gas chromatograph of one of the preceding claims, wherein the valves (16, 17) each have a valve body (35) deflectable from a stable position where the valve is open to a metastable position where the valve is closed.

5. The gas chromatograph of one of the preceding claims, wherein all gas passages (8, 12, 15) have the same inner diameter as that of the second separation column (4).

6. A modulator (6) for sampling a chromatographic peak eluting from a first separation column (1) into a second separation column (4) of a comprehensive two-dimensional gas chromatograph,
wherein said modulator (6) comprises a planar component (7) containing
a first gas passage (8) having
a first inlet end (9) for the connection of a carrier gas source (10) and
a first outlet end (11) for the connection of the second separation column (4),
a second gas passage (12) having
a second inlet end (13) for the connection of the first separation column (1) and
a second outlet end (14),
a connecting gas passage (15) between the first and second gas passages (8, 12),
two individually controllable open/close valves (16, 17) arranged in parallel connection in the first gas passage (8) between the first inlet end (9) and the branch-off of the connecting gas passage (15), and
the gas passages (8, 12, 15) and valves (16, 17) being formed in the planar component (7) by micromachining.

7. The modulator of claim 6, wherein the valves (16, 17) are each adapted to be electromechanically actuated.

8. The modulator of claim 6, wherein the valves (16, 17) are each adapted to be pneumatically actuated via pneumatic connections (18, 19) in the planar component (7).

9. The modulator of any of claim 6 to 8, wherein the valves (16, 17) each have a valve body (35) deflectable from a stable position where the valve is open to a metastable position where the valve is closed.

10. The modulator of any of claim 6 to 9, wherein all gas passages (8, 12, 15) have the same inner diameter as that of the second separation column (4).

## Patentansprüche

1. Umfassender zweidimensionaler Gas-Chromatograph, der eine erste Trennsäule (1), eine zweite Trennsäule (4) und einen durch eine Steuereinheit (20) gesteuerten Modulator (6), um einen von der ersten Säule (1) in die zweite Säule (4) eluierenden chromatographischen Spitzenwert abzutasten, besitzt,
wobei der Modulator (6) eine ebene Komponente (7) umfasst, die Folgendes enthält:
einen ersten Gasdurchlass (8) mit
einem ersten Einlassende (9), mit dem eine Trägergasquelle (10) verbunden ist, und
einem ersten Auslassende (11), mit dem die zweite Trennsäule (4) verbunden ist,
einen zweiten Gasdurchlass (12) mit
einem zweiten Einlassende (13), mit dem die erste Trennsäule (1) verbunden ist, und
einem zweiten Auslassende (14),
einen Verbindungsgasdurchlass (15) zwischen dem ersten und dem zweiten Gasdurchlass (8, 12),
zwei einzeln steuerbare Öffnungs-/Schließ-Ventile (16, 17), die in einer parallelen Verbindung in dem ersten Gasdurchlass (8) zwischen dem ersten Einlassende (9) und der Abzweigung des Verbindungsgasdurchlasses (15) angeordnet sind, und
wobei die Gasdurchlässe (8, 12, 15) und Ventile (16, 17) in der ebenen Komponente (7) durch Mikrobearbeitung gebildet sind und
wobei die Steuereinheit (20) dafür ausgelegt ist, jedes Abtastereignis durch Steuern eines der Ventile (16, 17) von geöffnet nach geschlossen, wenn das andere Ventil geschlossen ist, zu beginnen und das Abtastereignis durch Steuern des anderen Ventils nach geöffnet zu beenden.

2. Gas-Chromatograph nach Anspruch 1, wobei die Ventile (16, 17) jeweils dafür ausgelegt sind, elektromechanisch betätigt zu werden.

3. Gas-Chromatograph nach Anspruch 1, wobei die Ventile (16, 17) jeweils dafür ausgelegt sind, durch Druckluftverbindungen (18, 19) in der ebenen Komponente (7) pneumatisch betätigt zu werden.

4. Gas-Chromatograph nach einem der vorhergehenden Ansprüche, wobei die Ventile (16, 17) jeweils einen Ventilkörper (35) besitzen, der aus einer stabilen Position, in der das Ventil geöffnet ist, in eine metastabile Position, in der das Ventil geschlossen ist, auslenkbar ist.

5. Gas-Chromatograph nach einem der vorhergehenden Ansprüche, wobei sämtliche Gasdurchlässe (8, 12, 15) den gleichen Innendurchmesser wie die zweite Trennsäule (4) haben.

6. Modulator (6) zum Abtasten eines von einer ersten Trennsäule (1) in eine zweite Trennsäule (4) eines umfassenden zweidimensionalen Gas-Chromatograpen eluierenden chromatographischen Spitzenwerts,
wobei der Modulator (6) eine ebene Komponente (7) umfasst, die Folgendes enthält:
einen ersten Gasdurchlass (8) mit
einem ersten Einlassende (9) für die Verbindung einer Trägergasquelle (10) und
einem ersten Auslassende (11) für die Verbindung der zweiten Trennsäule (4),
einen zweiten Gasdurchlass (12) mit
einem zweiten Einlassende (13) für die Verbindung der ersten Trennsäule (1) und
einem zweiten Auslassende (14),
einen Verbindungsgasdurchlass (15) zwischen dem ersten und dem zweiten Gasdurchlass (8, 12),
zwei einzeln steuerbare Öffnungs-/Schließ-Ventile (16, 17), die in einer parallelen Verbindung in dem ersten Gasdurchlass (8) zwischen dem ersten Einlassende (9) und der Abzweigung des Verbindungsgasdurchlasses (15) angeordnet sind, und
wobei die Gasdurchlässe (8, 12, 15) und Ventile (16, 17) in der ebenen Komponente (7) durch Mikrobearbeitung gebildet sind.

7. Modulator nach Anspruch 6, wobei die Ventile (16, 17) jeweils dafür ausgelegt sind, elektromechanisch betätigt zu werden.

8. Modulator nach Anspruch 6, wobei die Ventile (16, 17) jeweils dafür ausgelegt sind, über Druckluftverbindungen (18, 19) in der ebenen Komponente (7) pneumatisch betätigt zu werden.

9. Modulator nach einem der Ansprüche 6 bis 8, wobei die Ventile (16, 17) jeweils einen Ventilkörper (35) haben, der aus einer stabilen Position, in der das Ventil geöffnet ist, in eine metastabile Position, in der das Ventil geschlossen ist, auslenkbar ist.

10. Modulator nach einem der Ansprüche 6 bis 9, wobei alle Gasdurchlässe (8, 12, 15) den gleichen Innendurchmesser wie die zweite Trennsäule (4) haben.

## Revendications

1. Chromatographe en phase gazeuse global, en deux dimensions, ayant une première colonne ( 1 ) de séparation, une deuxième colonne ( 4 ) de séparation et un modulateur ( 6 ) commandé par une unité ( 20 ) de commande pour l'échantillonnage d'un pic chromatographique s'éluant de la première colonne ( 1 ) dans la deuxième colonne ( 4 ),
dans lequel le modulateur ( 6 ) comprend un composant ( 7 ) planaire contenant
un premier passage ( 8 ) pour du gaz ayant
une première extrémité ( 9 ) d'entrée, à laquelle est reliée une source ( 10 ) de gaz porteur et
une première extrémité ( 11 ) de sortie, à laquelle est reliée la deuxième colonne ( 4 ) de séparation,
un deuxième passage ( 12 ) pour du gaz ayant
une deuxième extrémité ( 13 ) d'entrée, à laquelle est reliée la première colonne ( 1 ) de séparation et
une deuxième extrémité ( 14 ) de sortie,
un passage ( 15 ) de liaison pour du gaz entre les premier et deuxième passages ( 8, 12 ) pour du gaz,
deux vannes ( 16, 17 ) ouvertes/fermées pouvant être commandées individuellement et montées en parallèle dans le premier passage ( 8 ) pour du gaz entre la première extrémité ( 9 ) d'entrée et la dérivation du passage ( 15 ) de liaison pour du gaz, et
les passages ( 8, 12, 15 ) pour du gaz et les vannes ( 16, 17 ) sont formés dans le composant ( 7 ) planaire par micro-usinage,
et dans lequel l'unité ( 20 ) de commande est conçue pour faire débuter chaque événement d'échantillonnage en faisant passer l'une des vannes ( 16, 17 ) d'ouverte à fermée, lorsque l'autre vanne est fermée, et pour arrêter l'événement d'échantillonnage en faisant passer l'autre vanne à ouvert.

2. Chromatographe en phase gazeuse suivant la revendication 1, dans lequel les vannes ( 16, 17 ) sont adaptées chacune pour être actionnées électromécaniquement.

3. Chromatographe en phase gazeuse suivant la revendication 1, dans lequel les vannes ( 16, 17 ) sont adaptées chacune pour être actionnées pneumatiquement par l'intermédiaire de liaisons ( 18, 19 ) pneumatiques dans le composant ( 7 ) planaire.

4. Chromatographe en phase gazeuse suivant l'une des revendications précédentes, dans lequel les vannes ( 16, 17 ) ont chacune un corps ( 35 ) de vanne pouvant passer par flexion d'une position stable où la vanne est ouverte à une position métastable où la vanne est fermée.

5. Chromatographe en phase gazeuse suivant l'une des revendications précédentes, dans lequel tous les passages ( 8, 12, 15 ) pour du gaz ont le même diamètre intérieur que celui de la deuxième colonne ( 4 ) de séparation.

6. Modulateur ( 6 ) pour échantillonner un pic chromatographique s'éluant d'une première colonne ( 1 ) de séparation dans une deuxième colonne ( 4 ) de séparation d'un chromatographe en phase gazeuse global, en deux dimensions, dans lequel le modulateur ( 6 ) comprend un composant ( 7 ) planaire contenant
un premier passage ( 8 ) pour du gaz ayant
une première extrémité ( 9 ) d'entrée, pour la liaison d'une source ( 10 ) de gaz porteur et
une première extrémité ( 11 ) de sortie, pour la liaison de la deuxième colonne ( 4 ) de séparation,
un deuxième passage ( 12 ) pour du gaz ayant
une deuxième extrémité ( 13 ) d'entrée, pour la liaison de la première colonne ( 1 ) de séparation et
une deuxième extrémité ( 14 ) de sortie,
un passage ( 15 ) de liaison pour du gaz entre les premier et deuxième passages ( 8, 12 ) pour du gaz,
deux vannes ( 16, 17 ) ouvertes/fermées pouvant être commandées individuellement et montées en parallèle dans le premier passage ( 8 ) pour du gaz entre la première extrémité ( 9 ) d'entrée et la dérivation du passage ( 15 ) de liaison pour du gaz, et
les passages ( 8, 12, 15 ) pour du gaz et les vannes ( 16, 17 ) sont formés dans le composant ( 7 ) planaire par micro-usinage.

7. Modulateur suivant la revendication 6, dans lequel les vannes ( 16, 17 ) sont adaptées chacune pour être actionnées électromécaniquement.

8. Modulateur suivant la revendication 6, les vannes ( 16, 17 ) sont adaptées chacune pour être actionnées pneumatiquement par l'intermédiaire de liaisons ( 18, 19 ) pneumatiques dans le composant ( 7 ) planaire.

9. Modulateur suivant l'une quelconque des revendications 6 à 8, dans lequel les vannes ( 16, 17 ) ont chacune un corps ( 35 ) de vanne pouvant passer par flexion d'une position stable où la vanne est ouverte à une position métastable où la vanne est fermée.

10. Modulateur suivant l'une quelconque des revendications 6 à 9, dans lequel tous les passages ( 8, 12, 15 ) pour du gaz ont le même diamètre intérieur que celui de la deuxième colonne ( 4 ) de séparation.
